# EUROPEAN PATENT SPECIFICATION

(11) **EP 4 590 062 B1**
(45) Date of publication and mention of the grant of the patent: **09.12.2026**
(21) Application number: 23869941.7
(22) Date of filing: 21.07.2023
(51) Int. Cl.: H04W 76/10, H04R 1/10, H04W 8/00, H04W 12/55, H04W 84/18

(54) **CONNECTION METHOD FOR AUDIO DEVICE, AND WIRELESS AUDIO DEVICE**
VERBINDUNGSVERFAHREN FÜR AUDIOVORRICHTUNG SOWIE DRAHTLOSE AUDIOVORRICHTUNG
PROCÉDÉ POUR DISPOSITIF AUDIO, ET DISPOSITIF AUDIO SANS FILS

(30) Priority: 28.09.2022 CN 202211193728
(43) Date of publication of application: 23.07.2025
(73) Proprietor: GUANGDONG OPPO MOBILE TELECOMMUNICATIONS CORP., LTD., Dongguan, Guangdong 523860 (CN)
(72) Inventor: HOU, Ruitian, Dongguan, Guangdong 523860 (CN)
(74) Representative: Novagraaf Technologies
(86) International application number: PCT/CN2023/108716
(87) International publication number: WO 2024/066694

(56) References cited:
- WO-A1-2020/107485
- CN-A- 108 174 457
- CN-A- 111 629 369
- CN-A- 115 580 944
- US-A1- 2018 083 468
- US-A1- 2022 224 525

## Description

### TECHNICAL FIELD

The present disclosure relates to the technical field of wireless devices, in particular, to a connection method for an audio device, and a device.

### BACKGROUND

With the development of short-range wireless technologies such as Bluetooth (BT), the variety of wireless devices supporting wireless connections has also been increasing. For example, in Bluetooth audio devices, in addition to traditional true wireless stereo (TWS) audio devices, TWS audio devices supporting the low energy audio (LE Audio) protocol have also begun to emerge.

Publication number US2022/224525A1 discloses a Bluetooth communication system that includes: a Bluetooth host device; and a Bluetooth device set which including a first member device and a second member device. The Bluetooth host device controls a display device to display a candidate device list, and to display a single device item in the candidate device list to represent the Bluetooth device set, but does not simultaneously display two device items in the candidate device list to represent the first member device and the second member device. The Bluetooth host device further transmits a first parameter to the first member device, and executes a predetermined cypher algorithm based on the first parameter to generate a first cypher key after receiving a selection command. The first member device executes the predetermined cypher algorithm based on the first parameter to generate a second cypher key corresponding to the first cypher key.

### SUMMARY

The present disclosure provides a connection method for an audio device, and a device.

In a first aspect, the embodiments of the present disclosure provide a connection method for an audio device, the method being applied to a wireless audio device, the wireless audio device including a first audio device and a second audio device, the first audio device having a first Bluetooth address, the second audio device having a second Bluetooth address, and the method including:
determining, by the first audio device, the second Bluetooth address of the second audio device;
transmitting, by the first audio device, a first broadcast signal, wherein the first broadcast signal carries the first Bluetooth address and the second Bluetooth address; and
establishing, by the first audio device, a low energy audio (LE Audio) connection with an electronic device based on the first Bluetooth address; and establishing, by the second audio device, an LE Audio connection with the electronic device based on the second Bluetooth address;
where the LE Audio connection established between the electronic device and the second audio device is established by bypassing a coordinated set identification profile, CSIP protocol by the electronic device.

In a second aspect, the embodiments of the present disclosure provide a connection method for an audio device, the method being applied to an electronic device, and the method including:
obtaining, in condition of scanning a first broadcast signal sent by a first audio device, a first Bluetooth address of the first audio device and a second Bluetooth address of a second audio device from the first broadcast signal; and
establishing an LE Audio connection with the first audio device based on the first Bluetooth address and an LE Audio connection with the second audio device based on the second Bluetooth address;
where the LE Audio connection established between the electronic device and the second audio device is established by bypassing a coordinated set identification profile, CSIP protocol by the electronic device.

In a third aspect, the embodiments of the present disclosure provide a wireless audio device, including a processor, a memory, and a wireless transceiver, the memory storing a computer program, wherein the processor, by executing the computer program, is configured to enable the wireless audio device to perform the connection method for the audio device which is applied to the wireless audio device in any of the above embodiments.

### BRIEF DESCRIPTION OF THE DRAWINGS

To more clearly illustrate the technical solutions of the embodiments of the present disclosure, a brief introduction to the drawings used in some embodiments of the present disclosure is provided below. It is evident that the drawings described below are only some of the embodiments of the present disclosure. For those skilled in the art, additional drawings may be derived from these drawings without creative work.
FIG. 1 is a connection process when a pair of TWS Bluetooth earphones are first connected to a mobile phone in the related technology.
FIG. 2 is structural information of a resolvable private address in an LE Audio broadcast in the related technology.
FIG. 3 is a schematic flowchart of a connection method for an audio device in some embodiments of the present disclosure.
FIG. 4 is a schematic scenario view of a connection method for an audio device in some embodiments of the present disclosure.
FIG. 5 is another schematic scenario view of a connection method for an audio device in some embodiments of the present disclosure.
FIG. 6 is another schematic flowchart of a connection method for an audio device in some embodiments of the present disclosure.
FIG. 7 is another schematic flowchart of a connection method for an audio device in some embodiments of the present disclosure.
FIG. 8 is a schematic structural view of a connection apparatus for an audio device in some embodiments of the present disclosure.
FIG. 9 is another schematic structural view of a connection apparatus for an audio device in some embodiments of the present disclosure.
FIG. 10 is another schematic structural view of a connection apparatus for an audio device in some embodiments of the present disclosure.
FIG. 11 is a schematic structural view of an electronic device in some embodiments of the present disclosure.
FIG. 12 is another schematic structural view of an electronic device in some embodiments of the present disclosure.

### DETAILED DESCRIPTION

The following provides a clear and complete description of the technical solutions in the embodiments of the present disclosure in conjunction with the accompanying drawings. It is evident that the described embodiments are only some embodiments of the present disclosure and not all of them. Any other embodiments obtained based on the embodiments of the present disclosure without any creative efforts should fall within the scope of the protection of the present disclosure.

The term "embodiment" used in the present disclosure means that specific features, structures, or characteristics described in connection with an embodiment may be included in at least one embodiment of the present disclosure. The occurrence of this term at various places in the specification does not necessarily refer to the same embodiment, nor does it indicate mutually exclusive independent or alternative embodiments. Those skilled in the art explicitly and implicitly understand that the embodiments described herein may be combined with other embodiments.

In the related technology, Bluetooth low energy audio (BLE Audio) technology provides a coordinated set identification profile (CSIP) protocol, which allows devices within the same group to achieve coordinated synchronization when interacting with external devices. The protocol primarily defines how an external device identifies multiple independent devices within a group as a single coordinated set. For example, a pair of Bluetooth earphones containing two earphones or a set of Bluetooth speakers consisting of three speakers can be regarded as a coordinated set. Audio devices within the same coordinated set share the same coordinated set identity resolving key (SIRK).

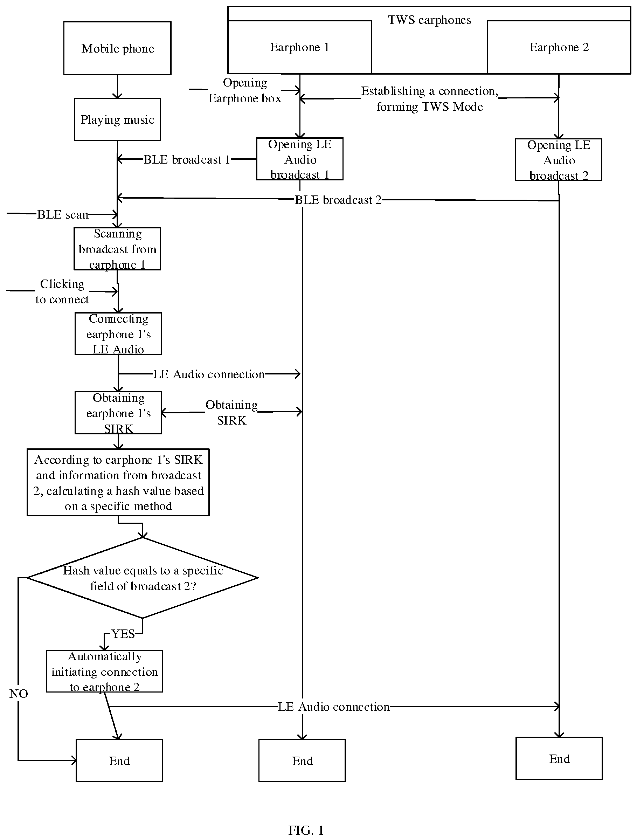

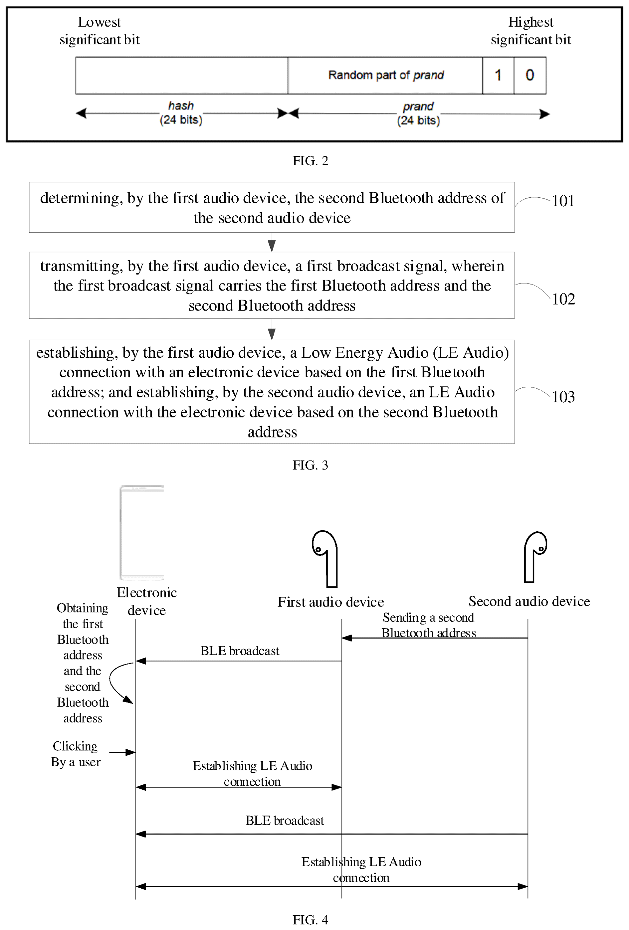

When using Bluetooth earphones that support low-energy audio transmission, a left earphone and a right earphone establish LE Audio connections respectively with an electronic device. As shown in FIG. 1, FIG. 1 is a connection process when TWS Bluetooth earphones are first connected to a mobile phone in the related technology. After earphone 1 and earphone 2 complete pairing, both the earphone 1 and the earphone 2 open BLE broadcasts. The mobile phone also opens Bluetooth and scans for broadcast signals. Based on a user operation, the mobile phone may trigger an LE Audio connection with the earphone 1 first. Then, the mobile phone analyzes the broadcast from the other earphone to determine whether it belongs to the same coordinated set as the already connected earphone. When they belong to the same coordinated set, the mobile phone establishes an LE Audio connection with the earphone 2. After the mobile phone establishes the LE Audio connection with earphone 1, it computes a hash value based on the SIRK of the earphone 1 and a specific field in the other earphone's broadcast information e.g., the hash field of the randomized set identifier (RSI) value and determines whether the computed hash value matches the hash value in the broadcast. As shown in FIG. 2, FIG. 2 is structural information of a resolvable private address in a BLE Audio broadcast in the related technology. The upper 24 bits of the address represent a random number part (prand), where the two highest bits are "10", while the lower 24 bits are the hash values from the broadcast.

When the calculated hash value matches the hash value in the broadcast, the mobile phone establishes an LE Audio connection with the earphone 2. In this connection scheme, the electronic device needs to wait until an LE Audio connection with a first audio device in the same coordinated set is established. Then based on the broadcast from a second audio device, the electronic device checks the hash value using the SIRK of the first audio device. After checking the hash value, the electronic device establishes an LE Audio connection with the second audio device. This results in a slow initial LE Audio connection between an entire wireless audio device (e.g., TWS earphones) and the electronic device (e.g., mobile phone).

To address this technical issue, an embodiment of the present disclosure provides a connection method for an audio device. The connection method for the audio device is applied to a wireless audio device. The wireless audio device may include Bluetooth earphones or other types of audio playback devices that support the Bluetooth protocol, such as Bluetooth speakers, etc. The wireless audio device includes a first audio device and a second audio device, where the first audio device has a first Bluetooth address, and the second audio device has a second Bluetooth address.

An embodiment of the present disclosure provides a connection method for an audio device, applied to a wireless audio device. The wireless audio device includes a first audio device and a second audio device, where the first audio device has a first Bluetooth address, and the second audio device has a second Bluetooth address. The method includes the following operations.

The second Bluetooth address of the second audio device is determined by the first audio device.

A first broadcast signal is transmitted by the first audio device, where the first broadcast signal carries the first Bluetooth address and the second Bluetooth address.

An LE Audio connection with an electronic device is established by the first audio device based on the first Bluetooth address, and an LE Audio connection with the electronic device is established by the second audio device based on the second Bluetooth address.

In some embodiments, before the first audio device determines the second Bluetooth address of the second audio device, the method includes the following operations.

Whether a historical connection record is empty is checked by the first audio device.

In condition of the historical connection record is empty, the operation of determining the second Bluetooth address of the second audio device is executed by the first audio device.

In some embodiments, transmitting the first broadcast signal by the first audio device, and the first broadcast signal carrying the first Bluetooth address and the second Bluetooth address includes the following operation.

The first Bluetooth address is written into a first preset field of the first broadcast signal and the second Bluetooth address is written into a second preset field of the first broadcast signal to generate the first broadcast signal; and the first broadcast signal is transmitted.

In some embodiments, the first broadcast signal is a BLE broadcast signal. Establishing, based on the first Bluetooth address, the LE Audio connection with the first audio device by the electronic device, and establishing, based on the second Bluetooth address, the LE Audio connection with the second audio device by the electronic device includes the following operations.

In response to a first connection request sent by the electronic device based on the first Bluetooth address, the LE Audio connection is established with the electronic device by the first audio device.

A second broadcast signal is transmitted by the second audio device, where the second broadcast signal is a BLE broadcast signal carrying the second Bluetooth address, the second broadcast signal is configured to enable the electronic device to initiate a second connection request to the second audio device based on the second Bluetooth address.

In response to the second connection request, the LE Audio connection is established with the electronic device by the second audio device.

In some embodiments, the second broadcast signal further carries the first Bluetooth address.

In some embodiments, the first broadcast signal is an extended inquiry result (EIR) packet. Establishing, based on the first Bluetooth address, the LE Audio connection with the electronic device by the first audio device, and establishing, based on the second Bluetooth address, the LE Audio connection with the electronic device by the second audio device, includes the following operations.

In response to a third connection request sent by the electronic device based on the first Bluetooth address, a classic Bluetooth connection is established between the first audio device and the electronic device.

A BLE broadcast signal is transmitted by the first audio device and a reminder message is sent to the second audio device, a BLE broadcast signal is transmitted by the second audio device in response to the reminder message.

In response to a fourth connection request sent by the electronic device based on the first Bluetooth address, an LE Audio connection is established with the electronic device by the first audio device; and in response to a fifth connection request sent by the electronic device based on the second Bluetooth address, an LE Audio connection is established with the electronic device by the second audio device.

An embodiment of the present disclosure provides a connection method for an audio device, the method being applied to an electronic device. The method includes the following operations.

In condition of scanning a first broadcast signal sent by a first audio device, a first Bluetooth address of a first audio device and a second Bluetooth address of a second audio device are obtained from the first broadcast signal.

Based on the first Bluetooth address, an LE Audio connection with the first audio device is established, and based on the second Bluetooth address, an LE Audio connection with the second audio device is established.

In some embodiments, in condition of scanning the first broadcast signal sent by the first audio device, obtaining a first Bluetooth address of the first audio device and the second Bluetooth address of the second audio device from the first broadcast signal, includes the following operation.

In condition of scanning the first broadcast signal sent by the first audio device, the first Bluetooth address of the first audio device is obtained from a first preset field of the first broadcast signal, and the second Bluetooth address of the second audio device is obtained from a second preset field of the first broadcast signal.

In some embodiments, the first broadcast signal is a BLE broadcast signal. After obtaining the first Bluetooth address of the first audio device from the first broadcast signal and the second Bluetooth address of the second audio device from the first broadcast signal, the method further includes the following operations.

Device prompt information corresponding to the first audio device is outputted based on the first broadcast signal.

Establishing the LE Audio connection with the first audio device based on the first Bluetooth address and establishing the LE Audio connection with the second audio device based on the second Bluetooth address, includes the following operations.

In condition of receiving a connection command triggered by the device prompt information, the LE Audio connection with the first audio device is established based on the first Bluetooth address.

In condition of scanning a second broadcast signal carrying the second Bluetooth address, the LE Audio connection with the second audio device that transmits the second broadcast signal is established, where the second broadcast signal is a BLE broadcast signal.

In some embodiments, the first broadcast signal is an EIR packet. After obtaining the first Bluetooth address of the first audio device and the second Bluetooth address of the second audio device from the first broadcast signal, the method further includes the following operations.

Device prompt information corresponding to the first audio device is outputted based on the first broadcast signal.

Establishing the LE Audio connection with the first audio device based on the first Bluetooth address and establishing the LE Audio connection with the second audio device based on the second Bluetooth address, includes the following operations.

In condition of receiving a connection command triggered by the device prompt information, the LE Audio connection with the first audio device is established based on the first Bluetooth address.

In condition of scanning a third broadcast signal carrying the first Bluetooth address, the LE Audio connection with the first audio device that transmits the third broadcast signal is established, where the third broadcast signal is a BLE broadcast signal.

In condition of scanning a fourth broadcast signal carrying the second Bluetooth address, the LE Audio connection with the second audio device that transmits the fourth broadcast signal is established, where the fourth broadcast signal is a BLE broadcast signal.

In some embodiments, after obtaining the first Bluetooth address of the first audio device and the second Bluetooth address of the second audio device from the first broadcast signal, the method further includes the following operations.

The first Bluetooth address and the second Bluetooth address are added to a whitelist.

Before establishing the LE Audio connection with the first audio device that transmitted the third broadcast signal, the method further includes the following operations.

In condition of scanning the third broadcast signal carrying the first Bluetooth address, whether the first Bluetooth address is in the whitelist is checked.

In condition of the first Bluetooth address in the whitelist, the LE Audio connection with the first audio device that transmits the third broadcast signal is established.

An embodiment of the present disclosure provides a connection method for an audio device, the method being applied to a first audio device. The first audio device has a first Bluetooth address. The method includes the following operations.

A second Bluetooth address of a second audio device is determined.

A first broadcast signal is transmitted, where the first broadcast signal carries the first Bluetooth address and the second Bluetooth address, enabling an electronic device to establish an LE Audio connection with the first audio device based on the first Bluetooth address, and establish an LE Audio connection with the second audio device based on the second Bluetooth address.

In some embodiments, the first broadcast signal is a BLE broadcast signal. After transmitting the first broadcast signal by the first audio device that transmits the first broadcast signal, the method further includes the following operation.

In response to a sixth connection request sent by the electronic device based on the first Bluetooth address, an LE Audio connection with the electronic device is established by the first audio device.

In some embodiments, the first broadcast signal is an EIR packet. After transmitting the first broadcast signal by the first audio device, the method further includes the following operation.

A BLE broadcast signal is transmitted, and in response to a seventh connection request sent by the electronic device based on the first Bluetooth address, an LE Audio connection with the electronic device is established.

As shown in FIG. 3, FIG. 3 is a schematic flowchart of a connection method for an audio device in some embodiments of the present disclosure. The specific process of a connection method for an audio device in some embodiments may include the following operations.

At block 101, the second Bluetooth address of the second audio device is determined by the first audio device.

The following embodiments of the present disclosure are explained using Bluetooth earphones as a wireless audio device. The Bluetooth earphones include a first earphone and a second earphone, where a first audio device is the first earphone, and the second audio device is the second earphone. The first earphone has a first Bluetooth address, and the second earphone has a second Bluetooth address.

The first earphone is configured with a first wireless connection module, and the second earphone is configured with a second wireless connection module.

In some embodiments, both the first wireless connection module and the second connection module are BLE modules, i.e., the earphones are single-mode Bluetooth devices. The first earphone may establish an LE Audio connection with an electronic device and the second earphone may establish an LE Audio connection with the electronic device.

In some embodiments, the LE Audio connection may be understood as a communication connection established based on the LE Audio Bluetooth protocol.

In some embodiments, the LE Audio connection may also be understood as including a communication link based on the LE Audio Bluetooth protocol.

In some embodiments, the LE Audio connection may not include establishing a Connected Isochronous Stream (CIS), a specific definition of which may be found in relevant Bluetooth standards. Instead, a CIS is established only when there is a need for data transmission. For example, after the LE Audio connection has been established and when there is a call or music streaming, the CIS is triggered to be established.

In some embodiments, the LE Audio connection may also include the establishment of a CIS.

In some embodiments, the establishment method of the LE Audio connection may refer to the provisions of the relevant Bluetooth standards, and the relevant content may be adjusted as the Bluetooth standards are updated.

In some embodiments, both the first wireless connection module and the second wireless connection module include a BLE submodule and a classic BT submodule, i.e., the earphones are dual-mode Bluetooth devices. Since the BLE submodule and the classic BT submodule belong to the same device, they share the same Bluetooth address. For example, the Bluetooth address of the BLE submodule of the first earphone is the first Bluetooth address and the Bluetooth address of the classic BT submodule of the first earphone is also the first Bluetooth address. The earphone may establish both an LE Audio connection and a classic BT connection with an electronic device simultaneously via the BLE module and the classic BT module. The electronic device may select either of these connections for data transmission based on its data transmission requirements.

After the first earphone and the second earphone are initiated, a pairing connection between the first earphone and the second earphone may be established, or not established.

In some embodiments, the two earphones do not establish a pairing connection with each other. After the two earphones are powered on, they independently connect to a earphone box (the connection may be wired, such as through contact pins, or wireless, such as Bluetooth), and then each earphone's Bluetooth address is transmitted to the other earphone through the earphone box. Alternatively, after the two earphones establish a connection with the earphone box for the first time, they each send their Bluetooth address to the earphone box. After the earphones are powered on by the user, the earphone box may automatically or in response to a control operation by the user transmit the Bluetooth address of one earphone to the other, ensuring that each earphone of the earphones obtain other's Bluetooth address. Alternatively, before the earphones leave the factory, for a pair of earphones, one earphone's Bluetooth address is pre-stored in the other earphone. For example, by configuring the Bluetooth protocol of a pair of earphones, the Bluetooth address of one earphone may be written into a specific field of the other earphone's broadcast signal.

In some embodiments, after the two earphones are powered on, they establish a pairing connection with each other. After the pairing connection is established, each earphone transmits its Bluetooth address to the other earphone.

In some embodiments, after the two earphones are powered on, they establish a pairing connection with each other. After the pairing connection is completed, one earphone in the two earphones is determined as a primary earphone and the other is determined as a secondary earphone through the broadcast signal. The primary earphone obtains the Bluetooth address of the secondary earphone. The first broadcast signal sent by the primary earphone carries both the Bluetooth address of the primary earphone and the Bluetooth address of the secondary earphone.

In the embodiments of the present disclosure, the terms "first audio device" and "second audio device", as well as "first earphone" and "second earphone", are used only for differentiation between the two earphones and do not imply that the first earphone must be the primary earphone. For example, the wireless audio device that first establishes a connection with the electronic device may be the first audio device, while the wireless audio device that establishes the connection later may be the second audio device.

At block 102, a first broadcast signal is transmitted by the first audio device, where the first broadcast signal caries the first Bluetooth address and the second Bluetooth address.

The first earphone may obtain the Bluetooth address of the second earphone using any of the methods described above. After the first earphone is powered on, it generates the first broadcast signal based on the first Bluetooth address and the second Bluetooth address. That is, the first broadcast signal transmitted by the first earphone carries both the first Bluetooth address and the second Bluetooth address. For a device capable of scanning the first broadcast signal, both of the two Bluetooth addresses may be obtained from a single broadcast signal.

In some embodiments, the operation of transmitting the first broadcast signal, where the first broadcast signal carries the first Bluetooth address and the second Bluetooth address, includes the following operations. The first Bluetooth address is written into a first preset field of the first broadcast signal and the second Bluetooth address is written into a second preset field of the first broadcast signal to generate the first broadcast signal and then transmit the first broadcast signal. The second preset field may serve as a customized extension field.

In some embodiments, for a single earphone, in addition to storing its own Bluetooth address in the first preset field as defined by the Bluetooth protocol, a second preset field may further be included in the first broadcast signal of the earphone, where the second preset field is configured to store the Bluetooth address of the other earphone.

At block 103, an LE Audio connection with an electronic device is established by the first audio device based on the first Bluetooth address, and an LE Audio connection with the electronic device is established by the second audio device based on the second Bluetooth address.

For an electronic device that scans the first broadcast signal, it may obtain both the first Bluetooth address and the second Bluetooth address from the first broadcast signal. For example, when the electronic device scans the first broadcast signal transmitted by the first audio device, it obtains the first Bluetooth address from the first preset field of the first broadcast signal and the second Bluetooth address from the second preset field of the first broadcast signal. The electronic device may establish an LE Audio connection with the first audio device based on the first Bluetooth address and establish an LE Audio connection with the second audio device based on the second Bluetooth address.

In some embodiments, the operation of establishing, based on the first Bluetooth address, the LE Audio connection with the first audio device by the electronic device, and establishing, based on the second Bluetooth address, the LE Audio connection with the second audio device by the electronic device includes the following operations. In response to a first connection request sent by the electronic device based on the first Bluetooth address, the LE Audio connection is established with the electronic device by the first audio device. A second broadcast signal is transmitted by the second audio device, where the second broadcast signal is a BLE broadcast signal carrying the second Bluetooth address, the second broadcast signal is configured to enable the electronic device to initiate a second connection request to the second audio device based on the second Bluetooth address. In response to the second connection request, the LE Audio connection is established with the electronic device by the second audio device.

In some embodiments, the wireless audio device is a single-mode Bluetooth device, and the first broadcast signal is a BLE broadcast signal. As shown in FIG. 4, FIG. 4 is a schematic scenario view of a connection method for an audio device in some embodiments of the present disclosure. When the electronic device scans the BLE broadcast signal, it obtains the first Bluetooth address and the second Bluetooth address from the BLE broadcast signal. Additionally, the electronic device may output device prompt information corresponding to the first audio device based on the first broadcast signal. The user may trigger a connection command based on the device prompt information. When the electronic device receives a connection command triggered by the device prompt information, it may initiate LE Audio connections with both the first audio device and the second audio device. Since the first broadcast signal is transmitted by the first audio device, the electronic device may directly send a first connection request to the first audio device based on the first Bluetooth address. In response to the first connection request, the first audio device establishes an LE Audio connection with the electronic device. Meanwhile, the second audio device transmits a BLE broadcast signal at a certain frequency, referred to as the second broadcast signal, which carries the second Bluetooth address. When the electronic device obtains the second Bluetooth address, and when it scans for a BLE broadcast signal carrying the second Bluetooth address, the electronic device sends a second connection request to the second audio device based on the second Bluetooth address. In response to the second connection request, the second audio device establishes an LE Audio connection with the electronic device.

Compared with the solutions in the related technology, in the embodiment, when the electronic device connects to an earphone for a first time, it does not need to wait until an LE Audio connection is established with one earphone before initiating an LE Audio connection with the other earphone. Instead, by obtaining Bluetooth addresses of both earphones from a broadcast signal transmitted by one earphone, the electronic device may quickly initiate LE Audio connections with both earphones, thereby improving a connection speed during an initial connection between the electronic device and the wireless audio device.

In some embodiments, the operation of establishing based on the first Bluetooth address, the LE Audio connection between the first audio device and the electronic device, and establishing, based on the second Bluetooth address, the LE Audio connection between the second audio device and the electronic device, includes the following operations. In response to a third connection request sent by the electronic device based on the first Bluetooth address, a classic BT connection is established between the first audio device and the electronic device. A BLE broadcast signal is transmitted by the first audio device and a reminder message is sent to the second audio device, a BLE broadcast signal is transmitted by the second audio device in response to the reminder message. In response to a fourth connection request sent by the electronic device based on the first Bluetooth address, the LE Audio connection is established with the electronic device by the first audio device, and in response to a fifth connection request sent by the electronic device based on the second Bluetooth address, the LE Audio connection is established with the electronic device by the second audio device.

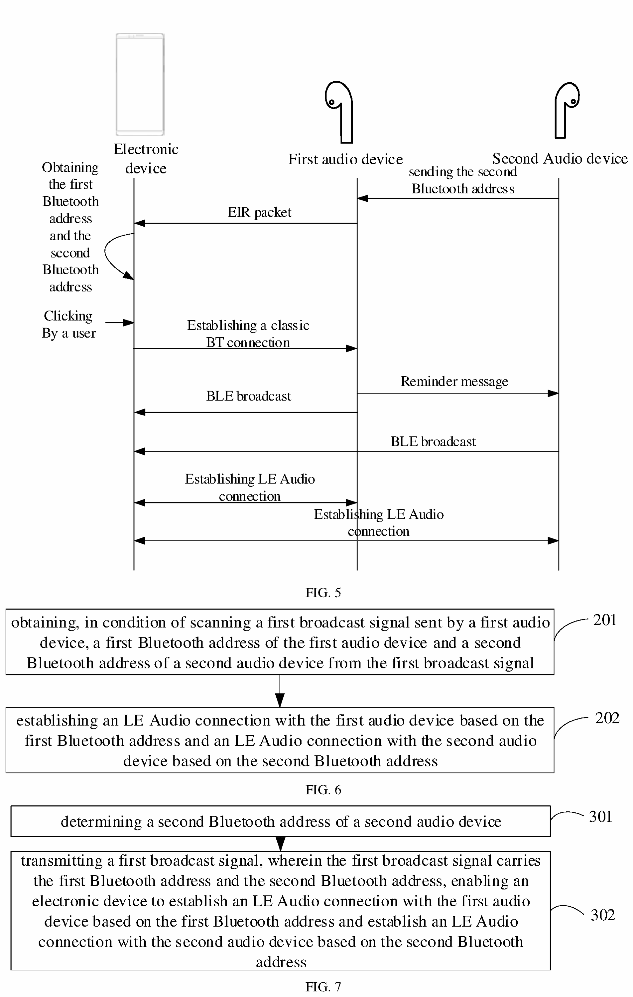

In some embodiments, the first broadcast signal is an EIR packet. The Bluetooth earphones are dual-mode Bluetooth devices that support establishing a dual-channel Bluetooth connection with an electronic device, including both a classic BT connection and an LE Audio connection. The electronic device is also a dual-mode Bluetooth device. The earphones maintain both the LE Audio connection and the classic BT connection with the electronic device simultaneously through the BLE module and the classic BT module. The electronic device selects an appropriate connection for data transmission based on transmission requirements. As shown in FIG. 5, FIG. 5 is another schematic scenario view of a connection method for an audio device in some embodiments of the present disclosure. After the Bluetooth earphones are powered on, the first earphone transmits an EIR packet in a broadcasting manner first, which carries the first Bluetooth address of the first earphone and the second Bluetooth address of the second earphone. When the electronic device receives the EIR packet, it may obtain the first Bluetooth address and the second Bluetooth address. Based on the EIR packet, the electronic device outputs device prompt information corresponding to the first audio device. The user may trigger a connection command based on this device prompt information. When the electronic device receives the connection command, the electronic device may initiate a connection request to the first audio device to establish a classic BT connection with it. After completing or during the process of establishing the classic BT connection with the electronic device, the first audio device starts transmitting a BLE broadcast signal to trigger the establishment of the other connection channel in the dual-mode connection. For example, the first audio device sends a reminder message to the second audio device. In response to the reminder message, the second audio device starts transmitting a BLE broadcast signal. When the electronic device scans a BLE broadcast signal carrying the first Bluetooth address, it sends a fourth connection request based on the first Bluetooth address, thereby establishing an LE Audio connection with the first audio device. When the electronic device scans a BLE broadcast signal carrying the second Bluetooth address, it sends a fifth connection request based on the second Bluetooth address, thereby establishing an LE Audio connection with the second audio device.

Compared with the solutions in the related technology, in the embodiment, both the electronic device and the headset are dual-mode Bluetooth devices, and when establishing both types of Bluetooth connections, the EIR packet from one earphone carries the Bluetooth addresses of both earphones, enabling the electronic device to quickly obtain Bluetooth addresses of the two earphones. This allows the electronic device to initiate LE Audio connections with both earphones, thereby improving a connection speed during an initial connection between the electronic device and the wireless audio device.

In some embodiments, before the first audio device determines the second Bluetooth address of the second audio device, the method further includes the following operations. Whether a historical connection record is empty is checked by the first audio device. In condition of the historical connection record is empty, the operation of determining the second Bluetooth address of the second audio device is performed by the first audio device.

It can be understood that when the first earphone successfully establishes a Bluetooth connection with the electronic device, the first earphone stores the Bluetooth address of the electronic device in the historical connection record to facilitate reconnection with the same electronic device next time. Based on this principle, after the first earphone is powered on, it first obtains its historical connection record. When the historical connection record is empty, it may be determined that either this is a connection for the first time or the historical connection record has been cleared. In this case, the first earphone obtains the Bluetooth address of the second earphone. Conversely, when the historical connection record is not empty, it may be determined that this connection is a reconnection rather than a connection for the first time. In this case, the first earphone only needs to transmit a Bluetooth broadcast signal. When the electronic device has a historical connection record for this earphone, it may directly reconnect to the earphone upon scanning the Bluetooth broadcast signal. For example, some embodiments of the present disclosure may be applied in scenarios where the earphones are powered on for the first time after opening the earphone box or when the earphones are reset to factory settings, erasing all connection records.

During specific implementations, the execution order of the operations described in the present disclosure is not limited to the sequence provided. As long as no conflicts arise, certain operations may be executed in a different order or performed simultaneously. Additionally, as long as there are no conflicts, the embodiments, implementation methods, and related technical features described in the present disclosure may be combined with each other.

As described above, the embodiments of the present disclosure provide a connection method that bypasses the CSIP protocol to connect devices within the same coordinated set. For example, compared with the related technology where the CSIP protocol requires the electronic device to first establish an LE Audio connection with the first audio device, obtain the SIRK value, and then determine whether to initiate an LE Audio connection with the second audio device, the technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

The embodiments of the present disclosure further provide a connection method for an audio device, applied to an electronic device. As shown in FIG. 6, FIG. 6 is another schematic flowchart of a connection method for an audio device in some embodiments of the present disclosure. The method includes the following operations.

At block 201, in condition of scanning a first broadcast signal sent by a first audio device, a first Bluetooth address of a first audio device and a second Bluetooth address of a second audio device are obtained from the first broadcast signal.

At block 202, based on the first Bluetooth address, an LE Audio connection with the first audio device is established, and based on the second Bluetooth address, an LE Audio connection with the second audio device is established.

In the embodiments of the present disclosure, the electronic device, as a counterpart of the earphones, acts as the executing entity to establish the Bluetooth connections between the electronic device and the earphones. The implementation process of each operation is detailed in the previous embodiments, which will not be repeated here.

The embodiment is applied to an electronic device, and the specific implementation of each operation may be found in the previous embodiments, which will not be repeated here.

In some embodiments, the operation of in condition of scanning the first broadcast signal sent by the first audio device, obtaining a first Bluetooth address of the first audio device and the second Bluetooth address of the second audio device from the first broadcast signal, includes the following operations. In condition of scanning the first broadcast signal sent by the first audio device, the first Bluetooth address of the first audio device is obtained from a first preset field of the first broadcast signal, and the second Bluetooth address of the second audio device is obtained from a second preset field of the first broadcast signal.

In some embodiments, the first broadcast signal is a BLE broadcast signal. After obtaining the first Bluetooth address of the first audio device from the first broadcast signal and the second Bluetooth address of the second audio device from the first broadcast signal, device prompt information corresponding to the first audio device is outputted based on the first broadcast signal. In condition of receiving a connection command triggered by the device prompt information, the LE Audio connection with the first audio device is established based on the first Bluetooth address. In condition of scanning a second broadcast signal carrying the second Bluetooth address, the LE Audio connection with the second audio device that transmits the second broadcast signal is established, where the second broadcast signal is a BLE broadcast signal.

In some embodiments, the first broadcast signal is an EIR packet. After obtaining the first Bluetooth address of the first audio device and the second Bluetooth address of the second audio device from the first broadcast signal, device prompt information corresponding to the first audio device is outputted based on the first broadcast signal. In condition of receiving a connection command triggered by the device prompt information, the LE Audio connection with the first audio device is established based on the first Bluetooth address. In condition of scanning a third broadcast signal carrying the first Bluetooth address, the LE Audio connection with the first audio device that transmitted the third broadcast signal is established, where the third broadcast signal is a BLE broadcast signal. In condition of scanning a fourth broadcast signal carrying the second Bluetooth address, the LE Audio connection with the second audio device that transmitted the fourth broadcast signal is established, where the fourth broadcast signal is a BLE broadcast signal.

In some embodiments, after obtaining the first Bluetooth address of the first audio device and the second Bluetooth address of the second audio device from the first broadcast signal, the method further includes the following operations. The first Bluetooth address and the second Bluetooth address are added to a whitelist. Before establishing the LE Audio connection with the first audio device that transmitted the third broadcast signal, the method further includes the following operations. In condition of scanning the third broadcast signal carrying the first Bluetooth address, whether the first Bluetooth address is in the whitelist is checked. In condition of the first Bluetooth address in the whitelist, the LE Audio connection with the first audio device that transmitted the third broadcast signal is established.

In the embodiment, the electronic device is configured with a Bluetooth connection whitelist mechanism. After obtaining the first Bluetooth address and the second Bluetooth address from the EIR packet, both the first Bluetooth address and the second Bluetooth address are added to the whitelist. Subsequently, when the electronic device scans a BLE broadcast signal carrying either the first Bluetooth address or the second Bluetooth address, it may directly establish a connection with the corresponding audio device.

As described above, the embodiments of the present disclosure provide a connection method that bypasses the CSIP protocol to connect devices within the same coordinated set. The technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

The embodiments of the present disclosure further provide a connection method for an audio device. As shown in FIG. 7, FIG. 7 is another schematic flowchart of a connection method for an audio device in some embodiments of the present disclosure. The method is applied to a first audio device, where the first audio device has a first Bluetooth address. The method includes the following operations.

At block 301, a second Bluetooth address of a second audio device is determined.

At block 302, a first broadcast signal is transmitted, where the first broadcast signal carries the first Bluetooth address and the second Bluetooth address, enabling an electronic device to establish an LE Audio connection with the first audio device based on the first Bluetooth address, and establish an LE Audio connection with the second audio device based on the second Bluetooth address.

In some embodiments, the first broadcast signal is a BLE broadcast signal. After transmitting the first broadcast signal by the first audio device transmits the first broadcast signal, the method further includes the following operations. In response to a sixth connection request sent by the electronic device based on the first Bluetooth address, an LE Audio connection with the electronic device is established by the first audio device.

In some embodiments, the first broadcast signal is an EIR packet. After transmitting the first broadcast signal by the first audio device, the method further includes the following operations. A BLE broadcast signal is transmitted, and in response to a seventh connection request sent by the electronic device based on the first Bluetooth address, an LE Audio connection with the electronic device is established.

As described above, the embodiments of the present disclosure provide a connection method that bypasses the CSIP protocol to connect devices within the same coordinated set. The technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

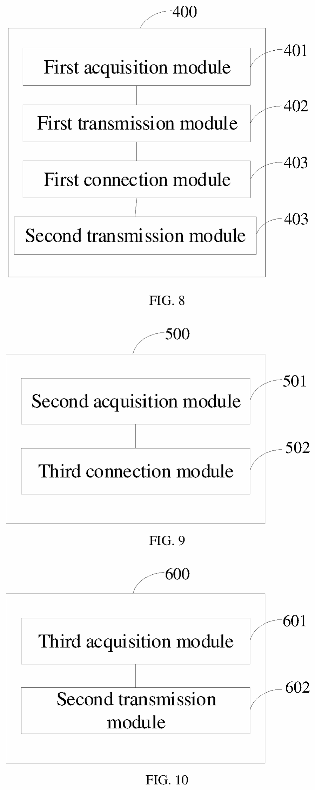

In one embodiment, an audio device connection apparatus is also provided. As shown in FIG. 8, FIG. 8 is a schematic structural view of a connection apparatus for an audio device in some embodiments of the present disclosure. A connection apparatus 400 for the audio device is applied to a wireless audio device, where the wireless audio device includes a first audio device and a second audio device. The first audio device has a first Bluetooth address, and the second audio device has a second Bluetooth address. The apparatus includes a first acquisition module 401, a first transmission module 402, and a first connection module 403, which are located in the first audio device, and a second connection module 404, which is located in the second audio device.

The first acquisition module 401 is configured to determine the second Bluetooth address of the second audio device.

The first transmission module 402 is configured to transmit a first broadcast signal, where the first broadcast signal carries the first Bluetooth address and the second Bluetooth address.

The first connection module 403 is configured to establish an LE Audio connection with the first audio device by an electronic device based on the first Bluetooth address.

The second connection module 404 is configured to establish an LE Audio connection with the second audio device by the electronic device based on the second Bluetooth address.

In some embodiments, the first acquisition module 401 is configured to check whether a historical connection record is empty. In condition of the historical connection record is empty, the second Bluetooth address of the second audio device is determined by the first audio device.

In some embodiments, the transmission module 402 is configured to write the first Bluetooth address into a first preset field of the first broadcast signal and write the second Bluetooth address into a second preset field of the first broadcast signal to generate and transmit the first broadcast signal.

In some embodiments, the first broadcast signal is a BLE broadcast signal. The first connection module 403 is configured to establish an LE Audio connection between the first audio device and the electronic device in response to a first connection request sent by the electronic device based on the first Bluetooth address.

The second connection module 404 is configured to transmit a second broadcast signal, where the second broadcast signal is a BLE broadcast signal carrying the second Bluetooth address and the second broadcast signal is configured to enable the electronic device to send a second connection request to the second audio device based on the second Bluetooth address, and establish an LE Audio connection between the second audio device and the electronic device in response to the second connection request.

In some embodiments, the second broadcast signal further carries the first Bluetooth address.

In some embodiments, the first broadcast signal is an EIR packet. The first connection module 403 is configured to transmit a BLE broadcast signal and send a reminder message to the second audio device. The second connection module 404 is configured to transmit a BLE broadcast signal in response to the reminder message.

The first connection module 403 is further configured to establish an LE Audio connection with the first audio device by the electronic device in response to a fourth connection request sent by the electronic device based on the first Bluetooth address.

The second connection module 404 is further configured to establish an LE Audio connection with the second audio device by the electronic device in response to a fifth connection request sent by the electronic device based on the second Bluetooth address.

The connection apparatus for the audio device provided in the embodiment belongs to the same concept as the connection method for the audio device described in the previous embodiments. The connection apparatus for the audio device may implement any of the methods provided in the embodiments of the connection method for the audio device. The detailed implementation process may be referred to the embodiments of the connection method for the audio device, which will not be repeated here.

As described above, the embodiments of the present disclosure provide a connection method that bypasses the CSIP protocol to connect devices within the same coordinated set. The technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

The embodiments of the present disclosure further provide a connection apparatus for an audio device, applied to an electronic device. As shown in FIG. 9, FIG. 9 is another schematic structural view of a connection apparatus for an audio device in some embodiments of the present disclosure. An apparatus 500 includes a second acquisition module 501 and a third connection module 502.

The second acquisition module 501 is configured to obtain a first Bluetooth address of a first audio device and a second Bluetooth address of a second audio device from a first broadcast signal in condition of scanning the first broadcast signal sent by a first audio device.

The third connection module 502 is configured to establish an LE Audio connection with the first audio device based on the first Bluetooth address, and an LE Audio connection with the second audio device based on the second Bluetooth address.

In some embodiments, the second acquisition module 501 is configured to obtain the first Bluetooth address of the first audio device from a first preset field of the first broadcast signal, and the second Bluetooth address of the second audio device from a second preset field of the first broadcast signal in condition of scanning the first broadcast signal sent by the first audio device.

In some embodiments, the first broadcast signal is a BLE broadcast signal. The third connection module 502 is configured to output device prompt information corresponding to the first audio device based on the first broadcast signal, establish the LE Audio connection with the first audio device based on the first Bluetooth address in condition of receiving a connection command triggered by the device prompt information, and establish the LE Audio connection with the second audio device that transmitted the second broadcast signal where the second broadcast signal is a BLE broadcast signal in condition of scanning a second broadcast signal carrying the second Bluetooth address.

In some embodiments, the first broadcast signal is an EIR packet. The third connection module 502 is configured to output device prompt information corresponding to the first audio device based on the first broadcast signal, establish the LE Audio connection with the first audio device based on the first Bluetooth address in condition of receiving a connection command triggered by the device prompt information, and establish the LE Audio connection with the second audio device that transmitted the fourth broadcast signal where the fourth broadcast signal is a BLE broadcast signal in condition of scanning a fourth broadcast signal carrying the second Bluetooth address.

In some embodiments, the second acquisition module 501 is configured to add the first Bluetooth address and the second Bluetooth address to a whitelist, check whether the first Bluetooth address is in the whitelist in condition of scanning the third broadcast signal carrying the first Bluetooth address, and establish the LE Audio connection with the first audio device that transmitted the third broadcast signal in condition of the first Bluetooth address in the whitelist.

As described above, the embodiments of the present disclosure provide a connection apparatus that bypasses the CSIP protocol to connect devices within the same coordinated set. The technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

The embodiments of the present disclosure further provide a connection apparatus for an audio device, applied to a first audio device. The first audio device has a first Bluetooth address. As shown in FIG. 10, FIG. 10 is another schematic structural view of a connection apparatus for an audio device in some embodiments of the present disclosure. A connection apparatus 600 for audio device includes a third acquisition module 601 and a second transmission module 602.

The third acquisition module 601 is configured to determine a second Bluetooth address of a second audio device.

The second transmission module 602 is configured to transmit a first broadcast signal, where the first broadcast signal carries the first Bluetooth address and the second Bluetooth address, enabling an electronic device to establish an LE Audio connection with the first audio device based on the first Bluetooth address and establish an LE Audio connection with the second audio device based on the second Bluetooth address.

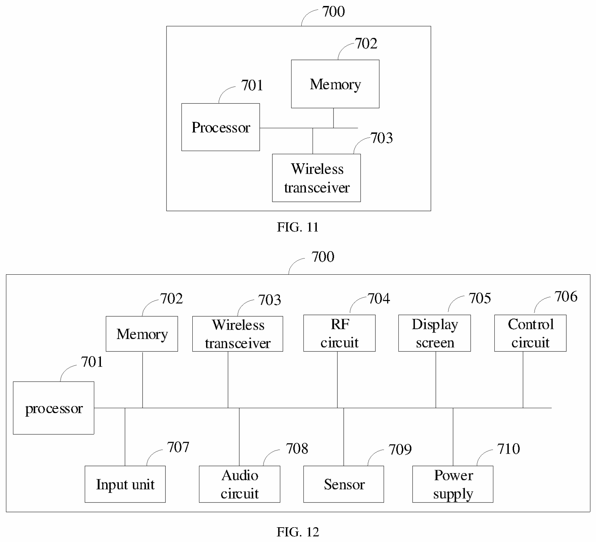

The embodiments of the present disclosure further provide an electronic device. The electronic device may be a smartphone, tablet, or other devices. As shown in FIG. 11, FIG. 11 is a schematic structural view of an electronic device in some embodiments of the present disclosure. An electronic device 700 includes a processor 701, a memory 702, and a wireless transceiver 703. The processor 701 is electrically connected to the memory 702 and the wireless transceiver 703.

The processor 701 is a control center of the electronic device 700. It connects different components of the electronic device through various interfaces and circuits. By running or invoking computer programs stored in the memory 702 and invoking data stored in the memory 702, the processor 701 executes various functions of the electronic device and processes data.

The memory 702 is configured to store a computer program and data. The computer program stored in memory 702 contain an instruction that may be executed by the processor 701. The computer program may include various functional modules. By invoking the computer program stored in memory 702, the processor 701 executes various functional applications and performs data processing.

The wireless transceiver 703 is configured to transmit and receive wireless signals. The electronic device 700 establishes a wireless connection with a wireless audio device via the wireless transceiver 703. For example, the wireless transceiver may be a Bluetooth module, such as a BLE module.

In the embodiment, the processor 701 in the electronic device 700 loads instructions corresponding to one or more computer program processes into the memory 702. The processor 701 then executes the computer program stored in the memory 702, thereby enabling the electronic device 700 to perform the following operations.

In condition of scanning a first broadcast signal sent by a first audio device, a first Bluetooth address of a first audio device and a second Bluetooth address of a second audio device are obtained from the first broadcast signal.

Based on the first Bluetooth address, an LE Audio connection with the first audio device is established, and based on the second Bluetooth address, an LE Audio connection with the second audio device is established.

In some embodiments, in condition of scanning the first broadcast signal sent by the first audio device, obtaining a first Bluetooth address of the first audio device and the second Bluetooth address of the second audio device from the first broadcast signal, the processor 701 may execute the following operations. In condition of scanning the first broadcast signal sent by the first audio device, the first Bluetooth address of the first audio device is obtained from a first preset field of the first broadcast signal, and the second Bluetooth address of the second audio device is obtained from a second preset field of the first broadcast signal.

In some embodiments, the first broadcast signal is a BLE broadcast signal. After obtaining the first Bluetooth address of the first audio device from the first broadcast signal and the second Bluetooth address of the second audio device from the first broadcast signal, the processor may execute the following operations. Device prompt information corresponding to the first audio device is outputted based on the first broadcast signal. Establishing the LE Audio connection with the first audio device based on the first Bluetooth address and establishing the LE Audio connection with the second audio device based on the second Bluetooth address, the processor 701 may execute the following operations. In condition of receiving a connection command triggered by the device prompt information, the LE Audio connection with the first audio device is established based on the first Bluetooth address. In condition of scanning a second broadcast signal carrying the second Bluetooth address, the LE Audio connection with the second audio device that transmitted the second broadcast signal is established, where the second broadcast signal is a BLE broadcast signal.

In some embodiments, the first broadcast signal is an EIR packet. After obtaining the first Bluetooth address of the first audio device and the second Bluetooth address of the second audio device from the first broadcast signal, the processor 701 may execute the following operations. Device prompt information corresponding to the first audio device is outputted based on the first broadcast signal. Establishing the LE Audio connection with the first audio device based on the first Bluetooth address and establishing the LE Audio connection with the second audio device based on the second Bluetooth address, the processor 701 may execute the following operations. In condition of receiving a connection command triggered by the device prompt information, the LE Audio connection with the first audio device is established based on the first Bluetooth address. In condition of scanning a third broadcast signal carrying the first Bluetooth address, the LE Audio connection with the first audio device that transmitted the third broadcast signal is established, where the third broadcast signal is a BLE broadcast signal. In condition of scanning a fourth broadcast signal carrying the second Bluetooth address, the LE Audio connection with the second audio device that transmitted the fourth broadcast signal is established, where the fourth broadcast signal is a BLE broadcast signal.

In some embodiments, after obtaining the first Bluetooth address of the first audio device and the second Bluetooth address of the second audio device from the first broadcast signal, the processor 701 may execute the following operations. The first Bluetooth address and the second Bluetooth address are added to a whitelist. Before establishing the LE Audio connection with the first audio device that transmitted the third broadcast signal, the method further includes the following operations. In condition of scanning the third broadcast signal carrying the first Bluetooth address, whether the first Bluetooth address is in the whitelist is checked. In condition of the first Bluetooth address in the whitelist, the LE Audio connection with the first audio device that transmitted the third broadcast signal is established.

As shown in FIG. 12, FIG. 12 is another schematic structural view of an electronic device in some embodiments of the present disclosure. The electronic device 700 further includes a radio frequency (RF) circuit 704, a display screen 705, a control circuit 706 an input unit 707, an audio circuit 708, a sensor 709, and a power supply 710. The processor 701 is electrically connected to the RF circuit 704, the display screen 705, the control circuit 706, the input unit 707, the audio circuit 708, the sensor 709, and the power supply 710.

The RF circuit 704 is configured to transmit and receive an RF signal, enabling wireless communication with network devices or other electronic devices.

The display screen 705 is configured to display information input by the user or information provided to the user, as well as various graphical user interfaces (GUIs) of the electronic device. These GUIs may include an image, a text, an icon, a video, or any combination thereof.

The control circuit 706 is electrically connected to the display screen 705 and is configured to control the display screen 705 to display information.

The input unit 707 is configured to receive numeric and character input or user feature information (e.g., fingerprints) and to generate input signals related to user settings and function control. The input signals may come from a keyboard, a mouse, a joystick, an optical sensor, or a trackball. The input unit 707 may include a fingerprint recognition module.

The audio circuit 708 may provide an audio interface between the user and the electronic device through a speaker and a microphone. The audio circuit 708 includes a microphone, which is electrically connected to the processor 701. The microphone is configured to receive voice input from the user.

The sensor 709 is configured to collect external environmental information. The sensor 709 may include one or more of an ambient light sensor, an accelerometer, or a gyroscope.

The power supply 710 is configured to provide power to various components of the electronic device 700. In some embodiments, the power supply 710 may be logically connected to the processor 701 via a power management system, thereby enabling functions such as charging management, discharging management, power consumption control, etc. to be realized through the power management system.

Although not shown in the drawings., the electronic device 700 may further include a camera, etc., which will not be described here.

As described above, the embodiments of the present disclosure provide a connection method that bypasses the CSIP protocol to connect devices within the same coordinated set. For example, compared with the related technology where the CSIP protocol requires the electronic device to first establish an LE Audio connection with the first audio device, obtain the SIRK value, and then determine whether to initiate an LE Audio connection with the second audio device, the technical solution of the present disclosure may add the BLE address field of the other audio device by LE broadcast content or classic EIR packet, enabling the electronic device to quickly initiate an LE Audio connection with the other device, thereby improving the connection speed of the first-time LE Audio connection between the wireless audio device (e.g., TWS earphones) and the electronic device (e.g., a smartphone), and improving user experience and competitiveness of the product.

The embodiments of the present disclosure further provide a wireless audio device. The wireless audio device includes a first audio device and a second audio device. For example, the wireless audio device may be Bluetooth earphones or another type of audio playback device that supports the Bluetooth protocol, such as a Bluetooth speaker. Taking Bluetooth earphones as an example, the wireless audio device includes a first earphone and a second earphone. The wireless audio device further includes a processor, a memory, and a wireless transceiver. The memory stores a computer program. The processor executes the following operations by calling the computer program.

The second Bluetooth address of the second audio device is determined by the first audio device.

A first broadcast signal is transmitted by the first audio device, where the first broadcast signal carries the first Bluetooth address and the second Bluetooth address.

An LE Audio connection with the first audio device is established by an electronic device based on the first Bluetooth address, and an LE Audio connection with the second audio device is established by the electronic device based on the second Bluetooth address.

The embodiments of the present disclosure further provide a wireless audio device. The wireless audio device may be one Bluetooth earphone in a pair of Bluetooth earphones or one speaker in a Bluetooth speaker system. The wireless audio device includes a processor, a memory, and a wireless transceiver. The memory stores a computer program. The processor executes the following operations by calling the computer program.

The second Bluetooth address of the second audio device is determined.

A first broadcast signal is transmitted, where the first broadcast signal carries the first Bluetooth address and the second Bluetooth address, enabling an LE Audio connection with the first audio device is established by an electronic device based on the first Bluetooth address, and an LE Audio connection with the second audio device is established by the electronic device based on the second Bluetooth address.

In the embodiment, the second audio device may form a pair of wireless audio devices with the wireless audio device.

The embodiments of the present disclosure further provide a computer-readable storage medium. The computer-readable storage medium stores a computer program. When the computer program is executed on a computer, the computer performs the connection method for the audio device described in any of the aforementioned embodiments.

Those skilled in the art can understand that all or part of the operations in the various methods described in the above embodiments can be executed by instructing relevant hardware through a computer program. The computer program can be stored in a computer-readable storage medium, which may include but is not limited to a read-only memory (ROM), a random access memory (RAM), a magnetic disk, an optical disk, and other storage media.

Additionally, the terms "first", "second," and "third" in the present disclosure are used to distinguish different objects rather than to describe a specific order. Furthermore, the terms "include" and "have", as well as any variations thereof, are intended to indicate non-exclusive inclusion. For example, a process, method, system, product, or device that includes a series of operations or modules is not limited to the listed operations or modules; some embodiments may include additional unlisted operations or modules, while others may include additional inherent operations or modules related to the process, method, product, or device.

The connection method and apparatus for an audio device, storage medium and device provided by the embodiments of the present disclosure are described in detail above. Specific embodiments have been used to explain the principles and implementation of the present disclosure. The description of the above embodiments is intended to facilitate the understanding of the method and core concept of the present disclosure. At the same time, for those skilled in the art, modifications in specific implementations and application scopes can be made based on the ideas of the present disclosure. In conclusion, the content of this specification should not be construed as limiting the scope of the present disclosure.

## Claims

1. A connection method for an audio device, the method being applied to a wireless audio device, the wireless audio device comprising a first audio device and a second audio device, the first audio device having a first Bluetooth address, the second audio device having a second Bluetooth address, and the method comprising:
determining (101), by the first audio device, the second Bluetooth address of the second audio device;
transmitting (102), by the first audio device, a first broadcast signal, wherein the first broadcast signal carries the first Bluetooth address and the second Bluetooth address; wherein the first broadcast signal is a Bluetooth low energy, BLE broadcast signal; and
establishing (103), by the first audio device, a low energy audio, LE Audio connection with an electronic device based on the first Bluetooth address; and establishing, by the second audio device, an LE Audio connection with the electronic device based on the second Bluetooth address, **characterized by** comprising:
establishing, by the first audio device, the LE Audio connection with the electronic device in response to a first connection request sent by the electronic device;
transmitting, by the second audio device, a second broadcast signal, wherein the second broadcast signal is a BLE broadcast signal carrying the second Bluetooth address, the second broadcast signal is configured to enable the electronic device to initiate a second connection request to the second audio device based on the second Bluetooth address; and
establishing, by the second audio device, the LE Audio connection with the electronic device in response to the second connection request.

2. The method according to claim 1, wherein before determining (101), by the first audio device, the second Bluetooth address of the second audio device, the method further comprises:
checking, by the first audio device, whether a historical connection record is empty;
wherein, in condition of the historical connection record is empty, the operation of determining the second Bluetooth address of the second audio device by the first audio device is executed.

3. The method according to claim 1, wherein transmitting (102), by the first audio device, the first broadcast signal, the first broadcast signal carrying the first Bluetooth address and the second Bluetooth address, comprises:
writing, by the first audio device, the first Bluetooth address into a first preset field of the first broadcast signal and the second Bluetooth address into a second preset field of the first broadcast signal to generate the first broadcast signal; and transmitting the first broadcast signal.

4. The method according to claim 1, wherein the second broadcast signal further carries the first Bluetooth address.

5. The method according to claim 3, wherein the first broadcast signal is an extended inquiry result, EIR packet;
establishing (103), by the first audio device, the LE Audio connection with the electronic device based on the first Bluetooth address, and establishing, by the second audio device, the LE Audio connection with the electronic device based on the second Bluetooth address, comprises:
establishing, by the first audio device, a classic Bluetooth connection with the electronic device in response to a third connection request sent by the electronic device based on the first Bluetooth address;
transmitting, by the first audio device, a BLE broadcast signal, and a reminder message to the second audio device, wherein the second audio device transmits a BLE broadcast signal in response to the reminder message; and
establishing, by the first audio device, an LE Audio connection with the electronic device in response to a fourth connection request sent by the electronic device based on the first Bluetooth address; and establishing, by the second audio device, an LE Audio connection with the electronic device in response to a fifth connection request sent by the electronic device based on the second Bluetooth address.

6. The method according to any one of claims 1 to 5, wherein before determining, by the first audio device, the second Bluetooth address of the second audio device, the method further comprises:
checking, by the first audio device, whether a historical connection record is empty;
wherein, in condition of the historical connection is not empty, the operation of transmitting, by the first audio device, the first broadcast signal is executed;
wherein, in condition of the electronic device having the historical connection record for the first audio device, the electronic device reconnects to the first audio device upon scanning the first broadcast signal.

7. A connection method for an audio device, the method being applied to an electronic device, and the method comprising:
obtaining (201), in condition of scanning a first broadcast signal sent by a first audio device, a first Bluetooth address of the first audio device and a second Bluetooth address of a second audio device from the first broadcast signal; and
establishing (202) an LE Audio connection with the first audio device based on the first Bluetooth address and an LE Audio connection with the second audio device based on the second Bluetooth address;
wherein the first broadcast signal is a BLE broadcast signal;
after obtaining, the first Bluetooth address of the first audio device and the second Bluetooth address of the second audio device from the first broadcast signal, the method further comprises:
outputting device prompt information corresponding to the first audio device based on the first broadcast signal;
**characterized in that**, establishing the LE Audio connection with the first audio device based on the first Bluetooth address and the LE Audio connection with the second audio device based on the second Bluetooth address comprises:
establishing, in condition of receiving a connection command triggered by the device prompt information, the LE Audio connection with the first audio device based on the first Bluetooth address; and
establishing, in condition of scanning a second broadcast signal carrying the second Bluetooth address, the LE Audio connection with the second audio device that transmits the second broadcast signal, wherein the second broadcast signal is a BLE broadcast signal.

8. The method according to claim 7, wherein obtaining (201), in condition of scanning the first broadcast signal sent by the first audio device, the first Bluetooth address of the first audio device and the second Bluetooth address of the second audio device from the first broadcast signal, comprises:
obtaining, in condition of the first broadcast signal sent by the first audio device, the first Bluetooth address of the first audio device from a first preset field of the first broadcast signal and the second Bluetooth address of the second audio device from a second preset field of the first broadcast signal.

9. The method according to claim 7, wherein the first broadcast signal is an EIR packet;
after obtaining the first Bluetooth address of the first audio device and the second Bluetooth address of the second audio device from the first broadcast signal, the method further comprises:
outputting device prompt information corresponding to the first audio device based on the first broadcast signal;
wherein establishing (202) the LE Audio connection with the first audio device based on the first Bluetooth address and the LE Audio connection with the second audio device based on the second Bluetooth address comprises:
establishing, in condition of receiving a connection command triggered by the device prompt information, the LE Audio connection with the first audio device based on the first Bluetooth address;
establishing, in condition of scanning a third broadcast signal carrying the first Bluetooth address, the LE Audio connection with the first audio device that transmits the third broadcast signal, wherein the third broadcast signal is a BLE broadcast signal; and
establishing, in condition of scanning a fourth broadcast signal carrying the second Bluetooth address, the LE Audio connection with the second audio device that transmits the fourth broadcast signal, wherein the fourth broadcast signal is a BLE broadcast signal.

10. The method according to claim 9, wherein after obtaining the first Bluetooth address of the first audio device and the second Bluetooth address of the second audio device from the first broadcast signal, the method further comprises:
adding the first Bluetooth address and the second Bluetooth address to a whitelist;
wherein before establishing the LE Audio connection with the first audio device that transmits the third broadcast signal, the method further comprises:
checking, in condition of scanning the third broadcast signal carrying the first Bluetooth address, whether the first Bluetooth address is in the whitelist; and
establishing, in condition of the first Bluetooth address in the whitelist, the LE Audio connection with the first audio device that transmits the third broadcast signal.

11. A wireless audio device, comprising a processor, a memory, and a wireless transceiver, the memory storing a computer program, wherein the processor, by executing the computer program, is configured to enable the wireless audio device to perform the connection method for the audio device in any of claims 1 to 6.

## Patentansprüche

1. Verbindungsverfahren für eine Audiovorrichtung, wobei das Verfahren auf eine drahtlose Audiovorrichtung angewendet wird, wobei die drahtlose Audiovorrichtung eine erste Audiovorrichtung und eine zweite Audiovorrichtung umfasst, wobei die erste Audiovorrichtung eine erste Bluetooth-Adresse aufweist, wobei die zweite Audiovorrichtung eine zweite Bluetooth-Adresse aufweist, und wobei das Verfahren umfasst:
Bestimmen (101) der zweiten Bluetooth-Adresse der zweiten Audiovorrichtung durch die erste Audiovorrichtung;
Senden (102) eines ersten Broadcast-Signals durch die erste Audiovorrichtung, wobei das erste Broadcast-Signal die erste Bluetooth-Adresse und die zweite Bluetooth-Adresse enthält; wobei das erste Broadcast-Signal ein Bluetooth Low Energy-, BLE-, Broadcast-Signal ist; und
Herstellen (103) einer Low Energy Audio-, LE-Audio-, Verbindung mit einer elektronischen Vorrichtung durch die erste Audiovorrichtung auf Basis der ersten Bluetooth-Adresse; und Herstellen einer LE-Audio-Verbindung mit der elektronischen Vorrichtung durch die zweite Audiovorrichtung auf Basis der zweiten Bluetooth-Adresse, **dadurch gekennzeichnet, dass** es umfasst:
Herstellen der LE-Audio-Verbindung mit der elektronischen Vorrichtung durch die erste Audiovorrichtung in Reaktion auf eine erste Verbindungsanfrage, die von der elektronischen Vorrichtung gesendet wird;
Senden eines zweiten Broadcast-Signals durch die zweite Audiovorrichtung, wobei das zweite Broadcast-Signal ein BLE-Broadcast-Signal ist, das die zweite Bluetooth-Adresse enthält, wobei das zweite Broadcast-Signal so konfiguriert ist, dass es der elektronischen Vorrichtung ermöglicht, eine zweite Verbindungsanfrage an die zweite Audiovorrichtung auf Basis der zweiten Bluetooth-Adresse zu initiieren; und
Herstellen der LE-Audio-Verbindung mit der elektronischen Vorrichtung durch die zweite Audiovorrichtung in Reaktion auf die zweite Verbindungsanfrage.

2. Verfahren nach Anspruch 1, wobei das Verfahren vor dem Bestimmen (101) der zweiten Bluetooth-Adresse der zweiten Audiovorrichtung durch die erste Audiovorrichtung weiter umfasst:
Überprüfen, durch die erste Audiovorrichtung, ob ein Verbindungsverlauf-Datensatz leer ist;
wobei, falls der Verbindungsverlauf-Datensatz leer ist, der Vorgang des Bestimmens der zweiten Bluetooth-Adresse der zweiten Audiovorrichtung durch die erste Audiovorrichtung ausgeführt wird.

3. Verfahren nach Anspruch 1, wobei das Senden (102) des ersten Broadcast-Signals durch die erste Audiovorrichtung, wobei das erste Broadcast-Signal die erste Bluetooth-Adresse und die zweite Bluetooth-Adresse enthält, Folgendes umfasst:
Schreiben, durch die erste Audiovorrichtung, der ersten Bluetooth-Adresse in ein erstes voreingestelltes Feld des ersten Broadcast-Signals und der zweiten Bluetooth-Adresse in ein zweites voreingestelltes Feld des ersten Broadcast-Signals, um das erste Broadcast-Signal zu erzeugen; und Senden des ersten Broadcast-Signals.

4. Verfahren nach Anspruch 1, wobei das zweite Broadcast-Signal weiter die erste Bluetooth-Adresse enthält.

5. Verfahren nach Anspruch 3, wobei das erste Broadcast-Signal ein Extended Inquiry Result-, EIR-, Paket ist;
das Herstellen (103) der LE-Audio-Verbindung mit der elektronischen Vorrichtung durch die erste Audiovorrichtung auf Basis der ersten Bluetooth-Adresse und das Herstellen der LE-Audio-Verbindung mit der elektronischen Vorrichtung durch die zweite Audiovorrichtung auf Basis der zweiten Bluetooth-Adresse umfasst:
Herstellen einer klassischen Bluetooth-Verbindung mit der elektronischen Vorrichtung durch die erste Audiovorrichtung in Reaktion auf eine dritte Verbindungsanfrage, die von der elektronischen Vorrichtung auf Basis der ersten Bluetooth-Adresse gesendet wird;
Senden eines BLE-Broadcast-Signals und einer Erinnerungsnachricht durch die erste Audiovorrichtung an die zweite Audiovorrichtung, wobei die zweite Audiovorrichtung in Reaktion auf die Erinnerungsnachricht ein BLE-Broadcast-Signal sendet; und
Herstellen einer LE-Audio-Verbindung mit der elektronischen Vorrichtung durch die erste Audiovorrichtung in Reaktion auf eine vierte Verbindungsanfrage, die von der elektronischen Vorrichtung auf Basis der ersten Bluetooth-Adresse gesendet wird; und Herstellen einer LE-Audio-Verbindung mit der elektronischen Vorrichtung durch die zweite Audiovorrichtung in Reaktion auf eine fünfte Verbindungsanfrage, die von der elektronischen Vorrichtung auf Basis der zweiten Bluetooth-Adresse gesendet wird.

6. Verfahren nach einem der Ansprüche 1 bis 5, wobei das Verfahren vor dem Bestimmen der zweiten Bluetooth-Adresse der zweiten Audiovorrichtung durch die erste Audiovorrichtung weiter umfasst:
Überprüfen, durch die erste Audiovorrichtung, ob ein Verbindungsverlauf-Datensatz leer ist;
wobei, falls der Verbindungsverlauf nicht leer ist, der Vorgang des Sendens des ersten Broadcast-Signals durch die erste Audiovorrichtung ausgeführt wird;
wobei, falls die elektronische Vorrichtung den Verbindungsverlauf-Datensatz für die erste Audiovorrichtung aufweist, die elektronische Vorrichtung nach dem Abtasten des ersten Broadcast-Signals die Verbindung zu der ersten Audiovorrichtung wiederherstellt.

7. Verbindungsverfahren für eine Audiovorrichtung, wobei das Verfahren auf eine elektronische Vorrichtung angewendet wird und wobei das Verfahren umfasst:
Erhalten (201), falls ein von einer ersten Audiovorrichtung gesendetes erstes Broadcast-Signal abgetastet wird, einer ersten Bluetooth-Adresse der ersten Audiovorrichtung und einer zweiten Bluetooth-Adresse einer zweiten Audiovorrichtung aus dem ersten Broadcast-Signal; und
Herstellen (202) einer LE-Audio-Verbindung mit der ersten Audiovorrichtung auf Basis der ersten Bluetooth-Adresse und einer LE-Audio-Verbindung mit der zweiten Audiovorrichtung auf Basis der zweiten Bluetooth-Adresse;
wobei das erste Broadcast-Signal ein BLE-Broadcast-Signal ist;
wobei das Verfahren nach dem Erhalten der ersten Bluetooth-Adresse der ersten Audiovorrichtung und der zweiten Bluetooth-Adresse der zweiten Audiovorrichtung aus dem ersten Broadcast-Signal weiter umfasst:
Ausgeben von Vorrichtungsaufforderungsinformationen, die der ersten Audiovorrichtung entsprechen, auf Basis des ersten Broadcast-Signals;
**dadurch gekennzeichnet, dass** das Herstellen der LE-Audio-Verbindung mit der ersten Audiovorrichtung auf Basis der ersten Bluetooth-Adresse und der LE-Audio-Verbindung mit der zweiten Audiovorrichtung auf Basis der zweiten Bluetooth-Adresse umfasst:
Herstellen, falls ein durch die Vorrichtungsaufforderungsinformationen ausgelöster Verbindungsbefehl empfangen wird, der LE-Audio-Verbindung mit der ersten Audiovorrichtung auf Basis der ersten Bluetooth-Adresse; und
Herstellen, falls ein zweites Broadcast-Signal abgetastet wird, das die zweite Bluetooth-Adresse enthält, der LE-Audio-Verbindung mit der zweiten Audiovorrichtung, die das zweite Broadcast-Signal sendet, wobei das zweite Broadcast-Signal ein BLE-Broadcast-Signal ist.

8. Verfahren nach Anspruch 7, wobei das Erhalten (201), falls das von der ersten Audiovorrichtung gesendete erste Broadcast-Signal abgetastet wird, der ersten Bluetooth-Adresse der ersten Audiovorrichtung und der zweiten Bluetooth-Adresse der zweiten Audiovorrichtung aus dem ersten Broadcast-Signal umfasst:
Erhalten, im Falle des von der ersten Audiovorrichtung gesendeten ersten Broadcast-Signals, der ersten Bluetooth-Adresse der ersten Audiovorrichtung aus einem ersten voreingestellten Feld des ersten Broadcast-Signals und der zweiten Bluetooth-Adresse der zweiten Audiovorrichtung aus einem zweiten voreingestellten Feld des ersten Broadcast-Signals.

9. Verfahren nach Anspruch 7, wobei das erste Broadcast-Signal ein EIR-Paket ist;
wobei das Verfahren nach dem Erhalten der ersten Bluetooth-Adresse der ersten Audiovorrichtung und der zweiten Bluetooth-Adresse der zweiten Audiovorrichtung aus dem ersten Broadcast-Signal weiter umfasst:
Ausgeben von Vorrichtungsaufforderungsinformationen, die der ersten Audiovorrichtung entsprechen, auf Basis des ersten Broadcast-Signals;
wobei das Herstellen (202) der LE-Audio-Verbindung mit der ersten Audiovorrichtung auf Basis der ersten Bluetooth-Adresse und der LE-Audio-Verbindung mit der zweiten Audiovorrichtung auf Basis der zweiten Bluetooth-Adresse umfasst:
Herstellen, falls ein durch die Vorrichtungsaufforderungsinformationen ausgelöster Verbindungsbefehl empfangen wird, der LE-Audio-Verbindung mit der ersten Audiovorrichtung auf Basis der ersten Bluetooth-Adresse;
Herstellen, falls ein drittes Broadcast-Signal abgetastet wird, das die erste Bluetooth-Adresse enthält, der LE-Audio-Verbindung mit der ersten Audiovorrichtung, die das dritte Broadcast-Signal sendet, wobei das dritte Broadcast-Signal ein BLE-Broadcast-Signal ist; und
Herstellen, falls ein viertes Broadcast-Signal abgetastet wird, das die zweite Bluetooth-Adresse enthält, der LE-Audio-Verbindung mit der zweiten Audiovorrichtung, die das vierte Broadcast-Signal sendet, wobei das vierte Broadcast-Signal ein BLE-Broadcast-Signal ist.

10. Verfahren nach Anspruch 9, wobei das Verfahren nach dem Erhalten der ersten Bluetooth-Adresse der ersten Audiovorrichtung und der zweiten Bluetooth-Adresse der zweiten Audiovorrichtung aus dem ersten Broadcast-Signal weiter umfasst:
Hinzufügen der ersten Bluetooth-Adresse und der zweiten Bluetooth-Adresse zu einer Whitelist;
wobei das Verfahren vor dem Herstellen der LE-Audio-Verbindung mit der ersten Audiovorrichtung, die das dritte Broadcast-Signal sendet, weiter umfasst:
Überprüfen, falls das dritte Broadcast-Signal abgetastet wird, das die erste Bluetooth-Adresse enthält, ob die erste Bluetooth-Adresse in der Whitelist enthalten ist; und
Herstellen, falls die erste Bluetooth-Adresse in der Whitelist enthalten ist, der LE-Audio-Verbindung mit der ersten Audiovorrichtung, die das dritte Broadcast-Signal sendet.

11. Drahtlose Audiovorrichtung, die einen Prozessor, einen Speicher und einen drahtlosen Sendeempfänger umfasst, wobei der Speicher ein Computerprogramm speichert, wobei der Prozessor durch Ausführen des Computerprogramms so konfiguriert wird, dass er die drahtlose Audiovorrichtung in die Lage versetzt, das Verbindungsverfahren für die Audiovorrichtung nach einem der Ansprüche 1 bis 6 durchzuführen.

## Revendications

1. Procédé de connexion pour un dispositif audio, le procédé étant appliqué à un dispositif audio sans fil, le dispositif audio sans fil comprenant un premier dispositif audio et un second dispositif audio, le premier dispositif audio présentant une première adresse Bluetooth, le second dispositif audio présentant une seconde adresse Bluetooth, et le procédé comprenant :
la détermination (101), par le premier dispositif audio, de la seconde adresse Bluetooth du second dispositif audio ;
la transmission (102), par le premier dispositif audio, d'un premier signal de diffusion, dans lequel le premier signal de diffusion transporte la première adresse Bluetooth et la seconde adresse Bluetooth ; dans lequel le premier signal de diffusion est un signal de diffusion Bluetooth Low Energy, BLE ; et
l'établissement (103), par le premier dispositif audio, d'une connexion audio basse énergie, LE Audio, avec un dispositif électronique sur la base de la première adresse Bluetooth ; et l'établissement, par le second dispositif audio, d'une connexion LE Audio avec le dispositif électronique sur la base de la seconde adresse Bluetooth, **caractérisé en ce qu'**il comprend :
l'établissement, par le premier dispositif audio, de la connexion LE Audio avec le dispositif électronique en réponse à une première demande de connexion envoyée par le dispositif électronique ;
la transmission, par le second dispositif audio, d'un deuxième signal de diffusion, dans lequel le deuxième signal de diffusion est un signal de diffusion BLE transportant la seconde adresse Bluetooth, le deuxième signal de diffusion est configuré pour permettre au dispositif électronique d'initier une deuxième demande de connexion à destination du second dispositif audio sur la base de la seconde adresse Bluetooth ; et
l'établissement, par le second dispositif audio, de la connexion LE Audio avec le dispositif électronique en réponse à la deuxième demande de connexion.

2. Procédé selon la revendication 1, dans lequel, avant la détermination (101), par le premier dispositif audio, de la seconde adresse Bluetooth du second dispositif audio, le procédé comprend en outre :
la vérification, par le premier dispositif audio, pour établir si un enregistrement de connexion historique est vide ;
dans lequel, à condition que l'enregistrement de connexion historique soit vide, l'opération de détermination de la seconde adresse Bluetooth du second dispositif audio par le premier dispositif audio est exécutée.

3. Procédé selon la revendication 1, dans lequel la transmission (102), par le premier dispositif audio, du premier signal de diffusion, le premier signal de diffusion transportant la première adresse Bluetooth et la seconde adresse Bluetooth, comprend :
l'écriture, par le premier dispositif audio, de la première adresse Bluetooth dans un premier champ prédéfini du premier signal de diffusion et de la seconde adresse Bluetooth dans un second champ prédéfini du premier signal de diffusion pour générer le premier signal de diffusion ; et la transmission du premier signal de diffusion.

4. Procédé selon la revendication 1, dans lequel le deuxième signal de diffusion transporte en outre la première adresse Bluetooth.

5. Procédé selon la revendication 3, dans lequel le premier signal de diffusion est un paquet de résultat de recherche étendu, EIR ;
l'établissement (103), par le premier dispositif audio, de la connexion LE Audio avec le dispositif électronique sur la base de la première adresse Bluetooth, et l'établissement, par le second dispositif audio, de la connexion LE Audio avec le dispositif électronique sur la base de la seconde adresse Bluetooth, comprennent :
l'établissement, par le premier dispositif audio, d'une connexion Bluetooth classique avec le dispositif électronique en réponse à une troisième demande de connexion envoyée par le dispositif électronique sur la base de la première adresse Bluetooth ;
la transmission, par le premier dispositif audio, d'un signal de diffusion BLE et d'un message de rappel au second dispositif audio, dans lequel le second dispositif audio transmet un signal de diffusion BLE en réponse au message de rappel ; et
l'établissement, par le premier dispositif audio, d'une connexion LE Audio avec le dispositif électronique en réponse à une quatrième demande de connexion envoyée par le dispositif électronique sur la base de la première adresse Bluetooth ; et l'établissement, par le second dispositif audio, d'une connexion LE Audio avec le dispositif électronique en réponse à une cinquième demande de connexion envoyée par le dispositif électronique sur la base de la seconde adresse Bluetooth.

6. Procédé selon l'une quelconque des revendications 1 à 5, dans lequel, avant la détermination, par le premier dispositif audio, de la seconde adresse Bluetooth du second dispositif audio, le procédé comprend en outre :
la vérification, par le premier dispositif audio, pour établir si un enregistrement de connexion historique est vide ;
dans lequel, à condition que la connexion historique ne soit pas vide, l'opération de transmission, par le premier dispositif audio, du premier signal de diffusion, est exécutée ;
dans lequel, à condition que le dispositif électronique présente l'enregistrement de connexion historique pour le premier dispositif audio, le dispositif électronique se reconnecte au premier dispositif audio lors du balayage du premier signal de diffusion.

7. Procédé de connexion pour un dispositif audio, le procédé étant appliqué à un dispositif électronique, et le procédé comprenant :
l'obtention (201), à condition de balayer un premier signal de diffusion envoyé par un premier dispositif audio, d'une première adresse Bluetooth du premier dispositif audio et d'une seconde adresse Bluetooth d'un second dispositif audio à partir du premier signal de diffusion ; et
l'établissement (202) d'une connexion LE Audio avec le premier dispositif audio sur la base de la première adresse Bluetooth et d'une connexion LE Audio avec le second dispositif audio sur la base de la seconde adresse Bluetooth ;
dans lequel le premier signal de diffusion est un signal de diffusion BLE ;
après l'obtention de la première adresse Bluetooth du premier dispositif audio et de la seconde adresse Bluetooth du second dispositif audio à partir du premier signal de diffusion, le procédé comprend en outre :
la sortie d'informations d'invite de dispositif correspondant au premier dispositif audio sur la base du premier signal de diffusion ;
**caractérisé en ce que** l'établissement de la connexion LE Audio avec le premier dispositif audio sur la base de la première adresse Bluetooth et de la connexion LE Audio avec le second dispositif audio sur la base de la seconde adresse Bluetooth comprend :
l'établissement, à condition de recevoir une commande de connexion déclenchée par les informations d'invite de dispositif, de la connexion LE Audio avec le premier dispositif audio sur la base de la première adresse Bluetooth ; et
l'établissement, à condition de balayer un deuxième signal de diffusion transportant la seconde adresse Bluetooth, de la connexion LE Audio avec le second dispositif audio qui transmet le deuxième signal de diffusion, dans lequel le deuxième signal de diffusion est un signal de diffusion BLE.

8. Procédé selon la revendication 7, dans lequel l'obtention (201), à condition de balayer le premier signal de diffusion envoyé par le premier dispositif audio, de la première adresse Bluetooth du premier dispositif audio et de la seconde adresse Bluetooth du second dispositif audio à partir du premier signal de diffusion, comprend :
l'obtention, à condition que le premier signal de diffusion soit envoyé par le premier dispositif audio, de la première adresse Bluetooth du premier dispositif audio à partir d'un premier champ prédéfini du premier signal de diffusion et de la seconde adresse Bluetooth du second dispositif audio à partir d'un second champ prédéfini du premier signal de diffusion.

9. Procédé selon la revendication 7, dans lequel le premier signal de diffusion est un paquet EIR ;
après l'obtention de la première adresse Bluetooth du premier dispositif audio et de la seconde adresse Bluetooth du second dispositif audio à partir du premier signal de diffusion, le procédé comprend en outre :
la sortie d'informations d'invite de dispositif correspondant au premier dispositif audio sur la base du premier signal de diffusion ;
dans lequel l'établissement (202) de la connexion LE Audio avec le premier dispositif audio sur la base de la première adresse Bluetooth et de la connexion LE Audio avec le second dispositif audio sur la base de la seconde adresse Bluetooth comprend :
l'établissement, à condition de recevoir une commande de connexion déclenchée par les informations d'invite de dispositif, de la connexion LE Audio avec le premier dispositif audio sur la base de la première adresse Bluetooth ;
l'établissement, à condition de balayer un troisième signal de diffusion transportant la première adresse Bluetooth, de la connexion LE Audio avec le premier dispositif audio qui transmet le troisième signal de diffusion, dans lequel le troisième signal de diffusion est un signal de diffusion BLE ; et
l'établissement, à condition de balayer un quatrième signal de diffusion transportant la seconde adresse Bluetooth, de la connexion LE Audio avec le second dispositif audio qui transmet le quatrième signal de diffusion, dans lequel le quatrième signal de diffusion est un signal de diffusion BLE.

10. Procédé selon la revendication 9, dans lequel, après l'obtention de la première adresse Bluetooth du premier dispositif audio et de la seconde adresse Bluetooth du second dispositif audio à partir du premier signal de diffusion, le procédé comprend en outre :
l'ajout de la première adresse Bluetooth et de la seconde adresse Bluetooth à une liste blanche ;
dans lequel, avant l'établissement de la connexion LE Audio avec le premier dispositif audio qui transmet le troisième signal de diffusion, le procédé comprend en outre :
la vérification, à condition de balayer le troisième signal de diffusion transportant la première adresse Bluetooth, pour établir si la première adresse Bluetooth figure dans la liste blanche ; et
l'établissement, à condition que la première adresse Bluetooth figure dans la liste blanche, de la connexion LE Audio avec le premier dispositif audio qui transmet le troisième signal de diffusion.

11. Dispositif audio sans fil, comprenant un processeur, une mémoire et un émetteur-récepteur sans fil, la mémoire stockant un programme informatique, dans lequel le processeur, en exécutant le programme informatique, est configuré pour permettre au dispositif audio sans fil de réaliser le procédé de connexion pour le dispositif audio selon l'une quelconque des revendications 1 à 6.
